# EUROPÄISCHE PATENTSCHRIFT

(11) **EP 1 511 786 B1**
(45) Veröffentlichungstag und Bekanntmachung des Hinweises auf die Patenterteilung: **21.03.2012**
(21) Anmeldenummer: 03755045.6
(22) Anmeldetag: 21.05.2003
(51) Int. Cl.: C08G 18/48, C08G 18/66, C08K 5/521

(54) **RAUCHGASARM VERBRENNENDES THERMOPLASTISCHES POLYURETHAN**
THERMOPLASTIC POLYURETHANE THAT EXHIBITS A LOW FORMATION OF COMBUSTION GAS WHEN BURNED
POLYURETHANE THERMOPLASTIQUE FORMANT PEU DE GAZ DE COMBUSTION

(30) Priorität: 29.05.2002 DE 10224340
(43) Veröffentlichungstag der Anmeldung: 09.03.2005
(73) Patentinhaber: BASF SE, 67056 Ludwigshafen (DE)
(72) Erfinder: HACKL, Christa, 49152 Bad Essen (DE); LEBERFINGER, Marcus, 49124 Georgsmarienhütte (DE); SCHOLZ, Günter, 49448 Lemförde (DE)
(86) Internationale Anmeldenummer: PCT/EP2003/005312
(87) Internationale Veröffentlichungsnummer: WO 2003/099896

(56) Entgegenhaltungen:
- EP-A- 0 508 072
- EP-A- 0 617 079
- FR-A- 2 812 881
- DATABASE WPI Section Ch, Week 200273 Derwent Publications Ltd., London, GB; Class A60, AN 2002-677020 XP002251815 & JP 2002 146179 A (NIPPON MIRACTORAN KK), 22. Mai 2002 (2002-05-22)

## Beschreibung

Die Erfindung betrifft flammwidriges thermoplastisches Polyurethan, das bei Verbrennung eine geringe Rauchgasbildung aufweist und das Flammschutzmittel in einer Menge enthält, dass nach dem Vertikalbrenntest UL94 V der Underwriters Laboratories für das thermoplastische Polyurethan die Bewertung V2, V1 oder V0 erreicht wird.

Thermoplastische Polyurethane (nachfolgend als TPU bezeichnet) sind teilkristalline Werkstoffe und gehören zu der Klasse der thermoplastischen Elastomere. Sie zeichnen sich durch gute kombinatorische Eigenschaften, wie geringer Abrieb und gute Chemikalienbeständigkeit, aus. TPU ist im allgemeinen brennbar, so dass zur Erzielung einer flammhemmenden Wirkung die Zugabe von Flammschutzmitteln notwendig ist. Üblicherweise werden halogenhaltige Verbindungen in Kombination mit Antimon-Derivaten eingesetzt. Ferner werden in zunehmenden Maße halogenfreie Flammschutzmittel, insbesondere auf Basis von Stickstoff- und Phosphorverbindungen, verwendet.

EP-A-617 079 beschreibt die Verwendung von Melaminderivaten in Kombination mit organischen Phosphaten oder Phosphonaten zur Herstellung von flammwidrigem TPU. Die in der Schrift als bevorzugt offenbarten TPU sind zwar hinsichtlich der Flammwidrigkeit vorteilhaft, jedoch bilden sich bei der Verbrennung dieser Stoffe unerwünschte Rauchgase. Eine Verringerung der Rauchgasbildung bei der Verbrennung von TPU ist insbesondere infolge einer europäischen Harmonisierung der einschlägigen Prüfvorschriften wünschenswert.

EP-A-508 702 offenbart flammgehemmtes TPU aus a) MDI, b) Poly(tetramethylenadiapat)glycol, c) 1,4-Butandiol und d) Melamin mit einem Gehalt von kleiner 50 Gew.%, bezogen auf das Gesamtgewicht des TPU, das Melamin als Flammhemmer enthält und nachdem Vertikalbrenntest UL-94 als V0 getestet wird.

Aufgabe der Erfindung war es daher, thermoplastische Polyurethane bereit zu stellen, die sowohl flammwidrig als auch rauchgasarm bei Verbrennung sind und somit den einschlägigen Prüfvorschriften genügen.

Die Aufgabe konnte durch thermoplastische Polyurethane gelöst werden, die einerseits Flammschutzmittel enthalten, andererseits keine oder nur geringe Mengen an aromatischen Kohlenwasserstoffgruppen aufweisen. Überraschenderweise wurde gefunden, dass ein hoher Gehalt an aromatischen Verbindungen in den Polyurethanen oder in den Additiven zu einer starken Rauchgasbildung führen.

Gegenstand der Erfindung ist daher ein flammwidriges thermoplastisches Polyurethan, hergestellt durch Umsetzung von
a) Polyisocyanaten ohne aromatische Gruppen mit
b) Verbindungen mit mindestens zwei gegenüber Isocyanat reaktiven Wasserstoffatomen und
c) Kettenverlängerungsmitteln.
d) Flammschutzmittel,
e) gegebenenfalls Katalysatoren
f) gegebenenfalls Zusatzstoffen,
wobei Flammschutzmittel (d) in einer Menge verwendet werden, dass nach dem Vertikalbrenntest UL94 der Underwriters Laboratories die Bewertung V2, V1 oder V0 erreicht wird und wobei die Komponenten b) bis f) einen Gehalt an Verbindungen mit aromatischen Kohlenwasserstoffgruppen von unter 5 Gew.-%, bezogen auf das Gesamtgewicht des thermoplastischen Polyurethans, aufweisen, und ein Verfahren zu dessen Herstellung.

Ferner ist Gegenstand der Erfindung die Verwendung der erfindungsgemäßen thermoplastischen Polyurethane zur Herstellung von rauchgasarm verbrennenden thermoplastischen Polyurethanen, welche gemäß des Indice de fumée nach NF-F16-101 eine maximale Rauchdichte (Dm) von 300 und einen maximalen Raumverdunklungsgrad nach 4 Minuten (VOF-4) von 650 aufweisen.

Unter aromatischen Kohlenwasserstoffgruppen werden im Rahmen dieser Anmeldung cyclische Kohlenwasserstoffverbindungen bzw. cyclische Kohlenwasserstoff-Strukturfragmente von Verbindungen verstanden, die ein konjugiertes p-Elektronensystem mit (4n + 2)-p-Elektronen aufweisen, wobei n eine natürliche Zahl bedeutet. Bevorzugt bedeutet n gleich 1. Es kann sich somit sowohl um isolierte als auch um kondensierte Cyclen handeln.

Beispiele für Verbindungen, die diese aromatischen Kohlenwasserstoffgruppen enthalten sind Benzol, Toluol oder Triphenylphosphat. Heteroaromaten, wie beispielsweise Furan, Thiophen, Melamin oder Pyridin fallen nicht unter den Begriff 'aromatische Kohlenwasserstoffgruppen'.

Die Komponenten (b) bis (f) der erfindungsgemäßen thermoplastischen Polyurethane weisen einen Gehalt an Verbindungen, die aromatische Kohlenwasserstoffgruppen enthalten, von unter 5 Gew.-%, bezogen, auf das Gesamtgewicht der thermoplastischen Polyurethane auf. Bevorzugt weisen die Komponenten (b) bis (f) der erfindungsgemäßen thermoplastischen Polyurethane weisen einen Gehalt an Verbindungen, die aromatische Kohlenwasserstoffgruppen enthalten, von unter 2 Gew.-%, mehr bevorzugt von unter 1 Gew.-%, besonders bevorzugt von unter 0,1 Gew.-%, bezogen, auf das Gesamtgewicht der thermoplastischen Polyurethane, auf. Insbesondere werden zur Herstellung der erfindungsgemäßen thermoplastischen Polyurethane keine Komponenten (b) bis (f) verwendet, die aromatische Kohlenwasserstoffgruppen enthalten.

Zu den erfindungsgemäßen TPUs und den Aufbaukomponenten (a) bis (f) ist im einzelnen folgendes auszuführen:
a) Als organische Polyisocyanate kommen aliphatische oder cycloaliphatische Polyisocyanate, bevorzugt Diisocyanate in Betracht. Im einzelnen seien beispielhaft genannt: aliphatische Diisocyanate, wie Hexamethylen-diisocyanat-1,6, 2-Methylpentamethylen-diisocyanat-1,5 oder cycloaliphatische Diisocyanate, wie Isophorondiisocyanat oder 1,4-Cyclohexan-diisocyanat oder H12-MDI.
   Dabei werden als Polyisocyanat a) Polyisocyanate ohne aromatische Gruppen verwendet. Besonders bevorzugt wird Hexamethylen-diisocyanat verwendet.
   Daraus ergibt sich, dass die Komponenten (a) bis (f) der erfindungsgemäßen thermoplastischen Polyurethane einen Gehalt an Verbindungen, die aromatische Kohlenwasserstoffgruppen enthalten, von unter 5 Gew.-%, mehr bevorzugt von unter 2 Gew.-%, besonders bevorzugt von unter 1 Gew.-%, insbesondere von unter 0,1 Gew.-%, bezogen, auf das Gesamtgewicht der thermoplastischen Polyurethane, aufweisen. In einer äußerst bevorzugten Ausführungsform enthält keine der Komponenten a) bis f) aromatische Kohlenwasserstoffgruppen.
   Die bevorzugt verwendeten Diisocyanate können gegebenenfalls in untergeordneten Mengen, z.B. in Mengen bis zu 3 Gew.-%, bezogen auf das organische Diisocyanat, durch ein tri- oder höherfunktionelles Polyisocyanat ersetzt werden, wobei dessen Menge jedoch so begrenzt werden sollte, dass noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven
   Wasserstoffatomen ausgeglichen, so dass eine zu weit gehende chemische Vernetzung des Polyurethans vermieden wird.
b) Als Verbindungen mit mindestens zwei gegenüber Isocyanat reaktiven Wasserstoffatomen werden im allgemeinen höhermolekulare Polyhydroxylverbindungen mit Molekulargewichten von 500 bis 8000 verwendet. Es eignen sich beispielsweise Polyetherpolyole und Polyesterpolyole, bevorzugt Polyetherdiole und Polyesterdiole. Eingesetzt wird beispielsweise Polybutadiendiol, mit dem auch gute Ergebnisse bei der Herstellung von vernetzbaren TPU erzielt werden. In Betracht kommen daneben auch andere hydroxylgruppenhaltige Polymere mit Ether- oder Estergruppen in der Polymerkette, beispielsweise Polyacetale, wie Polyoxymethylene, und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen sollten zumindest überwiegend linear sein und müssen im Sinne der Isocyanatreaktion im wesentlichen difunktionell aufgebaut sein. Die genannten Polyhydroxylverbindungen können als Einzelkomponenten oder in Form von Mischungen zur Anwendung kommen.
   Geeignete Polyetherpolyole können nach bekannten Verfahren, beispielsweise durch anionische Polymerisation von Alkylenoxiden mit beispielsweise Alkalihydroxiden, wie Natrium- oder Kaliumhydroxid, oder Alkalialkoholaten als Katalysatoren und unter Zusatz mindestens eines Startermoleküls, das 2 bis 3, vorzugsweise 2, reaktive Wasserstoffatome gebunden enthält, oder durch kationische Polymerisation mit Lewis-Säuren als Katalysatoren aus einem oder mehreren Alkylenoxiden mit 2 bis 4 Kohlenstoffatomen im Alkylenrest hergestellt werden.
   Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meg/g, bevorzugt kleiner als 0,01 meg/g, verstanden. Derartige Polyetheralkohole werden zumeist durch Anlagerung von Alkylenoxiden, insbesondere Ethylenoxid, Propylenoxid und Mischungen daraus, an die oben beschriebenen Starter in Gegenwart von hochaktiven Katalysatoren hergestellt. Derartige hochaktive Katalysatoren sind beispielsweise Cäsiumhydroxid oder Multimetallcyanidkatalysatoren, bevorzugt Doppelmetallcyanidkatalyatoren, auch als DMC-Katalysatoren bezeichnet. Ein häufig eingesetzter DMC-Katalysator ist das Zinkhexacyanocobaltat.
   Geeignete Alkylenoxide sind beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyldialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, oder Diethylenglykol. Die Startermoleküle können einzeln oder als Gemische eingesetzt werden.
   Vorzugsweise verwendet werden Polyetherole, basierend auf 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Insbesondere vorzugsweise geeignet sind ferner die hydroxylgruppenhaltigen Polymerisationsprodukte des Tetrahydrofurans.
   Die im wesentlichen linearen Polyetherole besitzen üblicherweise zahlenmittlere Molekulargewichte von 500 bis 8000, vorzugsweise 600 bis 6000 und insbesondere 800 bis 3500 g/mol, wobei die Polyoxytetramethylen-glykole bevorzugt Molekulargewichte von 500 bis 2800 aufweisen. Sie können sowohl einzeln als auch in Form von Mischungen untereinander zur Anwendung kommen.
   Geeignete Polyesterpolyole, bevorzugt Polyesterdiole, können beispielsweise aus Dicarbonsäuren mit 2 bis 12, vorzugsweise 4 bis 6, Kohlenstoffatomen und Diolen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für die Diole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die Diole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6; Kondensationsprodukte von w-Hydroxycarbonsäuren, beispielsweise w-Hydroxycapronsäure, und vorzugsweise Polymerisationsprodukte von Lactonen, beispielsweise gegebenenfalls substituiertem ω-Caprolacton.
   Als Polyesterdiole vorzugsweise verwendet werden Ethandiolpolyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.
   Die Polyesterdiole besitzen in der Regel zahlenmittlere Molekulargewichte von 500 bis 6000, vorzugsweise von 800 bis 3500 g/mol.
   In einer bevorzugten Ausführungsform wird als Komponente (b) ein Polyesterol auf Basis eines Alkylenglykoladipats eingesetzt, wobei der Alkylenrest 2 bis 6 Kohlenstoffatome aufweist. Der Einsatz von Alkylenglykoladipaten, insbesondere' mit einer Alkylengruppe mit 2 bis 6 Kohlenstoffatomen, ermöglicht es, dass zur Erreichung der gewünschten Flammwidrigkeit (Klassifizierung V2, V1 im Vertikalbrenntest UL94 der Underwriters Laboratories) nur geringe Mengen oder bevorzugt kein Flammschutzmittel (d) verwendet werden muss.
   Als Kettenverlängerungsmittel mit Molekulargewichten im allgemeinen von 60 bis 399, vorzugsweise 65 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, sowie Polytetramethylenglykole mit Molekulargewichten von 162 bis 378.
   Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.
d) In der vorliegenden Erfindung können halogenhaltige oder bevorzugt halogenfreie Flammschutzmittel als Komponente (d) verwendet werden. Das eingesetzte Flammschutzmittel ist so zu wählen, dass die Komponenten b) bis f) einen Gehalt an Verbindungen mit aromatischen Kohlenwasserstoffgruppen von unter 5 Gew.-%, bezogen, auf das Gesamtgewicht der Komponenten b) bis f), aufweisen. Folglich ist der Einsatz von Flammschutzmittel, die keine aromatischen Kohlenwasserstoffgruppen aufweisen, bevorzugt.
   Als halogenhaltige Flammschutzmittel kann eine Vielzahl an fluorierten oder bevorzugt chlorierten oder bromierten Verbindungen zum Einsatz gelangen. Ein wirksames Flammschutzmittel ist z.B. chloriertes Polyethylen, gegebenenfalls mit Antimon-(III)-oxid als Synergist und/oder Zinkborat. Zur Verbesserung der Flammschutzwirkung können dem TPU auch eine Reihe anderer Metalloxide zugesetzt werden, wie z.B. ZnO, B₂O₃, Fe₂O₃, CaO. Polytetrafluorethylen und Kieselsäure in sehr geringen Anteilen ist zur Reduzierung der Abtropfneigung geeignet.
   Als halogenfreie Flammschutzmittel eignen sich neben z.B. Aluminiumtrihydrat, und Magnesiumhydrat für besonders niederschmelzenden TPU's auch die Triester der Phosphorsäure wie Trialkylphosphate. Besonders bevorzugt sind oligomere Phosphorsäureester bzw. Phosphonsäureester und auch cyclische Phosphate, die sich vom Pentaerythrit oder Neopentylglycol ableiten. Diese Phosphorsäureester können alleine oder in Mischungen untereinander oder in Mischungen mit Phosphonsäureestern eingesetzt werden. Üblicherweise werden jedoch Phosphorsäureester oder Phosphonsäureester eingesetzt.
   In einer besonders geeigneten Flammschutzkombination werden die Phosphorsäureester und/oder Phosphonsäureester in Mischungen zusammen mit einem oder mehreren Melaminderivaten für das TPU eingesetzt. Wobei dann das Gewichtsverhältnis von Phosphat und Phosphonat zu Melaminderivat vorzugsweise im Bereich von 5:1 bis 1:5 liegt. Als Melaminderivate kommen dabei vorzugsweise Melamincyanurat, Melaminphosphat, Melaminborat, besonders bevorzugt Melamincyanurat in Frage.
   In einer besonders bevorzugten Ausführungsform werden Melaminderivaten ohne Zusatz von Phosphorsäureestern als Flammschutzmittel (d) verwendet. Insbesondere wird Melamincyanurat als alleiniges Flammschutzmittel (d) verwendet.
   Die Flammschutzmittel werden in einer Menge zugesetzt, die ausreichend ist, dass das erfindungsgemäße thermoplastische Polyurethan so flammwidrig ist, dass es nach dem Vertikalbrenntest UL94 der Underwriters Laboratories die Bewertung V2, V1 oder V0 erreicht. Bevorzugt wird soviel Flammschutzmittel eingesetzt, dass die Bewertung V1 oder V0, besonders bevorzugt V0 gemäß UL94 erreicht wird.
   Die benötigte Menge an Flammschutzmittel hängt von den verwendeten Komponenten (a) bis (c) und (e) und (f) ab. Üblicherweise wird im allgemeinen eine Menge von 0,1 bis 60 Gew.-% Flammschutzmittel (c), bevorzugt von 1 bis 40 Gew.-% und besonders bevorzugt von 5 bis 25 Gew.-%, bezogen auf das Gesamtgewicht des stabilisierten TPU, dem TPU zugegeben.
   In einer bevorzugten Ausführungsform wird als Flammschutzkomponente (d) Melamincyanurat in einer Menge von 0,1 bis 60 Gew.%, besonders, 5 bis 40 Gew%, insbesondere 15 bis 25 Gew.-% eingesetzt.
e) Geeignete Katalysatoren (e), welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile der Komponente (b) eingesetzt.
f) Zur Herstellung der erfindungsgemäßen Polyurethane können gegebenenfalls Hilfs- und/oder Zusatzstoffe (f) zugegeben werden. Diese sind aus dem Stand der Technik allgemein bekannt. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Verstärkungsmittel.
   Diese Hilfsmittel und/oder Zusatzstoffe können hierzu in die Aufbaukomponenten oder in die Reaktionsmischung zur Herstellung der TPU eingebracht werden. Nach einer anderen Verfahrensvariante können diese Hilfsmittel und/oder Zusatzstoffe (f) mit dem TPU gemischt und anschließend verschmolzen werden oder sie werden direkt der Schmelze einverleibt.

Neben den genannten Komponenten a), b) und c) und gegebenenfalls d) bis f) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann das Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Die erfindungsgemäßen TPUs werden durch Umsetzung von
a) Polyisocyanaten ohne aromatische Gruppen mit
b) Verbindungen mit mindestens zwei gegenüber Isocyanat reaktiven Wasserstoffatomen und
c) Kettenverlängerungsmitteln,
d) Flammschutzmittel,
e) gegebenenfalls Katalysatoren
f) gegebenenfalls Zusatzstoffen,
wobei Flammschutzmittel (d) in einer Menge verwendet werden, dass nach dem Vertikalbrenntest UL94 der Underwriters Laboratories die Bewertung V2, V1 oder V0 erreicht wird und wobei die Komponenten b) bis f) einen Gehalt an Verbindungen mit aromatischen Kohlenwasserstoffgruppen von unter 5 Gew.-%, bezogen, auf das Gesamtgewicht der thermoplastischen Polyurethane, aufweisen, hergestellt.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b), (c) und gegebenenfalls (d) bis (f) nacheinander oder gleichzeitig miteinander vermischt werden, wobei die Reaktion unmittelbar einsetzt.

Beim Extruderverfahren werden die Aufbaukomponenten (a), (b), (c) sowie gegebenenfalls (d) bis (f) einzeln oder als Gemisch in den Extruder eingeführt, z.B. bei Temperaturen von 100 bis 280°C, vorzugsweise 140 bis 250°C, und zur Reaktion gebracht. Das erhaltene TPU wird extrudiert, abgekühlt und granuliert.

Nach der Synthese kann das TPU gegebenenfalls durch Konfektionierung auf einem Extruder modifiziert werden. Durch diese Konfektionierung kann das TPU z.B. in seinem Schmelzindex oder seiner Granulatform entsprechend den Anforderungen modifiziert werden.

Die Komponenten (d) bis (f) können während der Synthese oder der Verarbeitung des TPU zudosiert werden. Es können auch Konzentrate, welche die Komponenten (d) bis (f) enthalten, hergestellt werden und während der Verarbeitung zum TPU zudosiert werden.

Die Zugabe der Additive erfolgt bevorzugt auf einem Konfektionierextruder, vorzugsweise mit dem Zwei-Schnecken-Verfahren, wobei das TPU als Granulat dosiert, dann aufgeschmolzen, und im weiteren Verlauf der Extrusion die Zugabe der Additive vorgenommen wird. Die Schmelze wird als Strang ausgetragen, gekühlt und derselbe anschließend im kontinuierlichen Verlauf granuliert oder aber über eine Unterwasser- oder Wasserringgranulierung direkt nach dem Düsenaustritt abgeschlagen. Die Flammschutzmittel (d) können jedoch gegebenenfalls bereits bei der Synthese auf der Bandanlage oder im Reaktionsextruder zugegeben werden.

Die erfindungsgemäßen thermoplastischen Polyurethane verbrennen mit geringer Rauchgasbildung. Zur Prüfung der bei der Verbrennung entstehenden Rauchgase stehen verschiedene Methoden zur Verfügung.

Die Prüfung der Rauchgasdichte kann in der NBS-Rauchdichtekammer nach ASTM E 662-79 erfolgen. Gemessen wird die Schwächung eines Lichtstrahls durch Rauch, der sich in der Prüfkammer sammelt. Der Rauch wird während der Pyrolyse des Prüfkörpers gebildet. Das Ergebnis wird als spezifische optische Dichte ausgedrückt.

Auch DIN E 53436/53437 ist gebräuchlich. Dabei wird der zu prüfende Kunststoff in einem Quarzrohr mittels eines Ringofens thermisch zersetzt und die Rauchdichtemessung erfolgt in der Messeinrichtung gemäß DIN 53437.

Die Bestimmung des Indice de fumée nach NF-F16-101 mit der Rauchgasdichtekurve nach NF X 10-702 ist eine häufig verlangte Prüfung, weil hierbei sowohl die Beurteilung in Bezug auf maximale Rauchdichte und Toxizität der Rauchgase erfolgen kann. Bei der Ermittlung der Rauchdichtekurve wird unter anderem die maximale Rauchdichte (Dm) und der Raumverdunklungsgrads nach 4 Minuten (VOF-4) angegeben, die eine Beurteilung über die Qualmbildung gestatten.

Die erfindungsgemäßen thermoplastischen Polyurethane entwickeln bei Verbrennung nur wenig Rauchgase. Bevorzugt bildet sich bei der Bestimmung des Indice de fumée nach NF-F16-101 mit der Rauchgasdichtekurve nach NF X 10-702 eine maximale Rauchdichte (Dm) von weniger als 300, mehr bevorzugt von weniger als 250, noch mehr bevorzugt von weniger als 200, besonders bevorzugt von weniger als 150 und insbesondere von weniger als 110. Außerdem zeigt sich bei Verbrennung der erfindungsgemäßen TPUs bei der Bestimmung des Indice de fumée nach NF-F16-101 mit der Rauchgasdichtekurve nach NF X 10-702 bevorzugt ein Raumverdunklungsgrads nach 4 Minuten (VOF-4) von weniger als 650, mehr bevorzugt von weniger als 450, noch mehr bevorzugt von weniger als 300, besonders bevorzugt von weniger als 200 und insbesondere von weniger als 150.

Die Verarbeitung der erfindungsgemäßen TPUs, die üblicherweise als Granulat oder in Pulverform vorliegen, zu Spritzguss- und Extrusionsartikeln, z.B. zu Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion. Derartige Spritzguss und Extrusionsartikel können auch aus Compounds, enthaltend das erfindungsgemäße TPU und mindestens einem weiteren thermoplastischen Kunststoff, besonders einem Polyolefin, Polyester, Polyether, Styrol oder Styrolcopolymer, Polyoxymethylen, bestehen.

Die erfindungsgemäßen thermoplastischen Polyurethane und die oben beschriebenen Formteile, enthaltend die erfindungsgemäßen TPUs können vielseitig eingesetzt werden, beispielsweise in Verkehrsmittel, Elektroartikeln und Maschinen. Beispiele für geeignete Verkehrsmittel sind Kraftfahrzeuge, beispielsweise PKWs oder LKWs, Schienenfahrzeuge, Flugzeuge oder Schiffe. Beispiele für Elektroartikel sind Haushaltsgeräte, Fernseher, Stereoanlagen, Videorekorder, Computer und Zubehör, Drucker und Zubehör, Kopierer und Zubehör, Scanner und Zubehör, Schaltschränke und Steueranlagen. Beispiele für Maschinen sind Verpackungsmaschinen, Roboter, spanabhebende Maschinen, Werkzeugmaschinen, Spritzgussmaschinen, Extruder, Kalander, Folienblasmaschinen, CAD-Maschinen, Fräsen, Stanzen, Pressen, Drehmaschinen, Baumaschinen, z.B. Bagger, Radlader, Kräne, Förderanlagen, Flurförderfahrzeuge, Sortiermaschinen, Fließbänder, Prozessüberwachungsanlagen, und Prozessleitstände.

Die Erfindung soll durch nachstehende Beispiele veranschaulicht werden.

### Beispiele

### Beispiel 1

Ein TPU wurde im One-shot-Verfahren im Labor hergestellt. Zum Einsatz gelangten 1,0 mol PTHF 1000 (Poly-Tetrahydrofuran mit Molekulargewicht 1000), 2.4 mol 4,4'-Diphenylmethandiisocyanat und 1,4 mol 1,4-Butandiol als Kettenverlängerer. Das PTHF wurde auf 70°C vorgeheizt, das 1,4-Butandiol dazugegeben und bei einer Temperatur von 65°C wurde das Diisocyanat eingemischt. Nach Erreichen einer Temperatur von 110°C wurde die Mischung auf einen beheizten Tisch in eine Teflonform gegossen und nach 10 Minuten in einen Heizschrank eingebracht und 15 Stunden bei 80°C getempert. Nach dem Tempern wurde das Material gemahlen, getrocknet und Spritzplatten hergestellt.

### Beispiel 2

Ein TPU wurde im One-shot-Verfahren im Labor hergestellt. Zum Einsatz gelangten 1,0 mol PTHF 1000, 2,4 mol Hexamethylendiisocyanat und 1,4 mol 1,4-Butandiol als Kettenverlängerer. Das PTHF wurde auf 805C vorgeheizt, das 1,4-Butandiol dazugegeben und bei einer Temperatur von 755C wurde das Diisocyanat eingemischt. Als Katalysator wurde Zinn-II-octoat eingesetzt. Nach Erreichen einer Temperatur von 1105C wurde die Mischung auf einen beheizten Tisch in eine Teflonform gegossen und nach 10 Minuten in einen Heizschrank eingebracht und 15 Stunden bei 805C getempert. Nach dem Tempern wurde das Material gemahlen, getrocknet und Spritzplatten hergestellt.

### Beispiel 3, 4 und 6

Die Synthese erfolgt wie bei Beispiel 1 angegeben. Eine in Tabelle 1 angegebene Menge an Flammschutzmittel wurde zu dem Polyetherol PTHF zugegeben und auf Starttemperatur erwärmt.

### Beispiel 5

Die Synthese erfolgt wie bei Beispiel II angegeben. Eine in Tabelle 1 angegebene Menge an Flammschutzmittel wurde zu dem Polyetherol PTHF zugegeben und auf Starttemperatur erwärmt.

Die in den Beispielen 1 bis 6 erhaltenen Proben wurden einer Rauchgasdichteprüfung gemäß NF-F16-101 (Index de Fumeé) unterzogen. Die Ergebnisse sind in Tabelle 1 aufgeführt. In Tabelle 1 beziehen sich alle Angaben auf Gewichtsteile. Beim Brenntest nach UL94 V bedeutet "-" nicht bestanden.

**Tabelle 1:**

| | Vergl.-Bsp. 1 | Vergl.-Bsp. 2 | Vergl.-Bsp. 3 | Vergl.-Bsp. 4 | Bsp. 5 | Vergl.-Bsp. 6 |
|---|---|---|---|---|---|---|
| Aromatisches TPU | 100 | | 80 | 80 | | 90 |
| Aliphatisches TPU | | 100 | | | 90 | |
| Diphenylkresylphosphat | | | 20 | | | |
| Tributylphosphat | | | | 20 | 10 | 10 |
| Dm maximale Rauchdichte | 97 | 70 | 685 | 260 | 100 | 200 |
| VOF-4 Raumverdunklungsgrad nach 4 min | 190 | 20 | 1360 | 605 | 125 | 420 |
| Brenntest nach UL94 | - | - | V2 | V2 | V2 | V2 |

Die Beispiele 1 und 2 zeigen den Vergleich zwischen aromatischem TPU und aliphatischem TPU ohne Zusatz eines Flammschutzmittels. In diesen beiden Beispielen wird zwar die erwünschte rauchgasarme Verbrennung erreicht, jedoch nicht die gewünschte Flammwidrigkeit (Brenntest nach UL 94 V nicht bestanden.)

Die Beispiele 3 und 4 zeigen den Vergleich zwischen aromatischem und aliphatischen Flammschutzmittel in TPU auf Basis von aromatischen Isocyanaten. Beispiel 3 liegt nicht im beanspruchten Bereich der Erfindung und erfüllt nicht die gewünschte Verbrennung bei geringer Rauchgasbildung.

Die Beispiele 5 und 6 den Vergleich zwischen einem TPUs auf Basis eines aliphatischen bzw. eines aromatischen Isocyanates bei Einsatz eines aliphatischen Flammschutzmittels. Es ist zu erkennen, dass der Einsatz von aliphatischen Flammschutzmitteln und aliphatischen Isocyanaten besonders bevorzugt ist.

## Patentansprüche

1. Flammwidriges thermoplastisches Polyurethan, hergestellt durch Umsetzung von
a) Polyisocyanaten ohne aromatische Gruppen mit
b) Verbindungen mit mindestens zwei gegenüber Isocyanat reaktiven Wasserstoffatomen und
c) Kettenverlängerungsmitteln,
d) Flammschutzmittel,
e) gegebenenfalls Katalysatoren
f) gegebenenfalls Zusatzstoffen,
wobei Flammschutzmittel (d) in einer Menge verwendet werden, dass nach dem Vertikalbrenntest UL94 der Underwriters Laboratories die Bewertung V2, V1 oder V0 erreicht wird und wobei die Komponenten b) bis f) einen Gehalt an Verbindungen mit aromatischen Kohlenwasserstoffgruppen von unter 5 Gew.-%, bezogen auf das Gesamtgewicht des thermoplastischen Polyurethans, aufweisen.

2. Thermoplastisches Polyurethan nach Anspruch 1, **dadurch gekennzeichnet, dass** das Flammschutzmittel d) in einer Menge von 5 bis 50 Gew. %, bezogen auf das Gesamtgewicht des thermoplastischen Polyurethans, enthalten ist.

3. Thermoplastisches Polyurethan nach Anspruch 1, **dadurch gekennzeichnet, dass** als Komponente (b) ein Polyesterol auf Basis eines Alkylenglykoladipats verwendet wird.

4. Verfahren zur Herstellung von flammwidrigen thermoplastischen Polyurethanen durch Umsetzung von
a) Polyisocyanaten ohne aromatische Gruppen mit
b) Verbindungen mit mindestens zwei gegenüber Isocyanat reaktiven Wasserstoffatomen und
c) Kettenverlängerungsmitteln,
d) Flammschutzmittel,
e) gegebenenfalls Katalysatoren
f) gegebenenfalls Zusatzstoffen,
wobei Flammschutzmittel (d) in einer Menge verwendet werden, dass nach dem Vertikalbrenntest UL94 der Underwriters Laboratories die Bewertung V2, V1 oder V0 erreicht wird und wobei die Komponenten b) bis f) einen Gehalt an Verbindungen mit aromatischen Kohlenwasserstoffgruppen von unter 5 Gew.-%, bezogen auf das Gesamtgewicht der thermoplastische Polyurethane, aufweisen.

5. Verwendung von flammwidrigen thermoplastischen Polyurethanen gemäß einem der Ansprüche 1 bis 3 zur Herstellung von rauchgasarm verbrennenden thermoplastischen Polyurethanen.

6. Verwendung von thermoplastischen Polyurethanen gemäß Anspruch 5 zur Herstellung von rauchgasarm verbrennenden thermoplastischen Polyurethanen, welche gemäß des Indice de fumee nach NF-F16-101 eine maximale Rauchdichte (Dm) von weniger als 300 und einen maximalen Raumverdunklungsgrad nach 4 Minuten (VOF-4) von weniger als 650 aufweisen.

7. Verwendung von thermoplastischen Polyurethanen gemäß Anspruch 5 oder 6 zur Herstellung von Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen.

## Claims

1. A flame-retardant thermoplastic polyurethane prepared by reacting
a) polyisocyanates without aromatic groups with
b) compounds having at least two hydrogen atoms reactive toward isocyanate, and
c) chain extenders,
d) flame retardant,
e) optionally catalysts, and
f) optionally additives,
the amount of flame retardant (d) used being such as to achieve the V-2, V-1, or V-0 classification in the Underwriters Laboratories UL 94 vertical burning test, and the content of compounds having aromatic hydrocarbon groups in components b) to f) being below 5% by weight, based on the total weight of the thermoplastic polyurethane.

2. The thermoplastic polyurethane according to claim 1, wherein the amount present of the flame retardant d) is from 5 to 50% by weight, based on the total weight of the thermoplastic polyurethane.

3. The thermoplastic polyurethane according to claim 1, wherein the component (b) used comprises a polyesterol based on an alkylene glycol adipate.

4. A process for preparing flame-retardant thermoplastic polyurethanes by reacting
a) polyisocyanates without aromatic groups with
b) compounds having at least two hydrogen atoms reactive toward isocyanate, and
c) chain extenders,
d) flame retardant,
e) optionally catalysts, and
f) optionally additives,
the amount of flame retardant (d) used being such as to achieve the V-2, V-1, or V-0 classification in the Underwriters Laboratories UL 94 vertical burning test, and the content of compounds having aromatic hydrocarbon groups in components b) to f) being below 5% by weight, based on the total weight of the thermoplastic polyurethanes.

5. The use of flame-retardant thermoplastic polyurethanes according to any of claims 1 to 3 for producing thermoplastic polyurethanes which generate little smoke during combustion.

6. The use of thermoplastic polyurethanes according to claim 5 for preparing thermoplastic polyurethanes which generate little smoke during combustion and which, in accordance with the Indice de fumée of NF-F16-101, have a maximum smoke density (Dm) of less than 300, and have a maximum degree of smoke-darkening after 4 minutes (VOF-4) of less than 650.

7. The use of thermoplastic polyurethanes according to claim 5 or 6 for producing films, moldings, rollers, fibers, panels in automobiles, hoses, cable plugs, bellows, drag cables, cable sheathing, gaskets, belts, or attenuating elements.

## Revendications

1. Polyuréthane thermoplastique ignifuge, fabriqué par mise en réaction de
a) des polyisocyanates sans groupes aromatiques avec
b) des composés contenant au moins deux atomes d'hydrogène réactifs avec les isocyanates et
c) des allongeurs de chaîne,
d) des agents ignifuges,
e) éventuellement des catalyseurs,
f) éventuellement des additifs,
les agents ignifuges (d) étant utilisés en une quantité qui atteint la note V2, V1 ou V0 selon le test de combustion verticale UL94 d'Underwriters Laboratories, et les composants b) à f) présentant une teneur en composés contenant des groupes hydrocarbures aromatiques inférieure à 5 % en poids, par rapport au poids total du polyuréthane thermoplastique.

2. Polyuréthane thermoplastique selon la revendication 1, **caractérisé en ce que** l'agent ignifuge d) est contenu en une quantité de 5 à 50 % en poids, par rapport au poids total du polyuréthane thermoplastique.

3. Polyuréthane thermoplastique selon la revendication 1, **caractérisé en ce qu'**un polyestérol à base d'un adipate d'alkylène glycol est utilisé en tant que composant (b).

4. Procédé de fabrication de polyuréthanes thermoplastiques ignifuges par mise en réaction de
a) des polyisocyanates sans groupes aromatiques avec
b) des composés contenant au moins deux atomes d'hydrogène réactifs avec les isocyanates et
c) des allongeurs de chaîne,
d) des agents ignifuges,
e) éventuellement des catalyseurs,
f) éventuellement des additifs,
les agents ignifuges (d) étant utilisés en une quantité qui atteint la note V2, V1 ou V0 selon le test de combustion verticale UL94 d'Underwriters Laboratories,
et les composants b) à f) présentant une teneur en composés contenant des groupes hydrocarbures aromatiques inférieure à 5 % en poids, par rapport au poids total du polyuréthane thermoplastique.

5. Utilisation de polyuréthanes thermoplastiques ignifuges selon l'une quelconque des revendications 1 à 3 pour la fabrication de polyuréthanes thermoplastiques qui brûlent en émettant peu de gaz de combustion.

6. Utilisation de polyuréthanes thermoplastiques selon la revendication 5 pour la fabrication de polyuréthanes thermoplastiques qui brûlent en émettant peu de gaz de combustion, qui présentent selon l'Indice de fumée de NF-F16-101 une densité de fumée maximale (Dm) inférieure à 300 et une valeur maximale d'obscurcissement dû à la fumée au terme des 4 premières minutes (VOF-4) inférieure à 650.

7. Utilisation de polyuréthanes thermoplastiques selon la revendication 5 ou 6 pour la fabrication de films, de pièces moulées, de rouleaux, de fibres, de revêtements automobiles, de tuyaux, de connecteurs de câbles, de soufflets, de câbles de traction, de gaines de câbles, de joints, de courroies ou d'éléments amortisseurs.
